Europäisches Patentamt

European Patent Office

Office européen des brevets

(11) Numéro de publication: **0 030 177**
**B1**

## (12) FASCICULE DE BREVET EUROPEEN

(45) Date de publication du fascicule du brevet: **20.03.85**

(21) Numéro de dépôt: **80401619.4**

(22) Date de dépôt: **13.11.80**

(51) Int. Cl.⁴: **B 41 M 1/34**, B 41 M 3/06, C 03 C 17/28

(54) **Procédé pour le marquage de vitrages feuilletés, et vitrages marqués par ce procédé.**

(30) Priorité: **14.11.79 IT 2726479**

(43) Date de publication de la demande:
**10.06.81 Bulletin 81/23**

(45) Mention de la délivrance du brevet:
**20.03.85 Bulletin 85/12**

(84) Etats contractants désignés:
**AT BE DE FR GB LU NL SE**

(56) Documents cités:
**DE-A-1 956 464**
**FR-A-2 401 881**
**US-A-3 434 865**

(73) Titulaire: **SAINT-GOBAIN VITRAGE**
**Les Miroirs 18, avenue d'Alsace**
**F-92400 Courbevoie (FR)**

(72) Inventeur: **Chiavaccini, Giorgio**
**Via II Colle 24**
**I-56042 Crespina (Pisa) (IT)**

(74) Mandataire: **Eudes, Marcel et al**
**Saint-Gobain Recherche 39 Quai Lucien Lefranc**
**F-93304 Aubervilliers Cedex (FR)**

Courier Press, Leamington Spa, England.

## Description

La présente invention a pour objet un procédé de marquage de produits dotés de transparence, notamment des vitrages multiples, et en particulier de vitrages fueilletés de sécurité employés principalement dans la construction, ainsi qui les vitrages marqués et rendus identifiables par ce procédé selon la description ci-dessous.

L'expression "marquage", d'usage courant, s'entend pour désigner les inscriptions, éventuellement figuratives, utilisées pour rendre identifiable un produit industriel afin d'en retrouver à coup sûr l'origine.

Pour ce qui est des vitrages transparents, avec des moyens connus, par exemple sablage ou gravure superficielle, apposition d'un timbre ou autre système d'impression déposant une composition qui contient des pigments ordinaires, l'inscription apparaît visible par transparence, inconvénient peu acceptable sur les vitrages destinés à la construction. Elle peut d'autre part s'effacer jusqu'à disparaître avec le temps ou à force d'usure. Toutefois, ce dernier inconvénient ne se présente pas dans le cas des vitrages multiples, en particulier des vitrages feuilletés, formés de plusieurs feuilles de verre assemblées par collage au moyen de couches intercalaires de composition convenable, habituellement en polyvinylbutyral, car la marque peut être apposée avant l'assemblage, sur l'une des faces destinées à venir à l'intérieur au contact d'une couche intercalaire.

D'autre part, il serait très désirable que le marquage puisse être effectué en plusieurs endroits relativement rapprochés, de façon que la marque d'identification apparaisse toujours sur le vitrage, même si celui-ci se trouve découpé en éléments de tailles et de configurations diverses selon les besoins de l'utilisateur voire pour permettre de l'identifier s'il a été volontairement ou accidentellement brisé en morceaux quelconques, fût-ce en ne disposant que d'un élément ou fragment de taille réduite, pour pouvoir en reconnaitre l'origine et définir les responsabilités ou simplement dans un but publicitaire.

Dans un domaine technique différent du marquage des vitrages, on connait, par la publication de brevet allemand DE—A— 1 956 464, des moyens de marquage de récipients en particulier de bouteilles en verre, à l'aide d'un produit déposé sur le bouchon préalablement imprimé d'autres motifs, et non sur le verre lui-même. Le produit ordinairement transparent et invisible, devient observable quand le bouchon est placé sous une forme particulière d'éclairage.

Un objet principal de la présente invention est le marquage de vitrages transparents ou du moins translucides permettant la production industrielle de vitrages, de préférence stratifiés, qui soient ensuite identifiables sans équivoque et sans les limitations de dimensions mentionnées ci-dessus.

Selon l'invention, on effectue le marquage désiré en apposant à volonté une succession de marques, de préférence à un pas déterminé, avec une composition, et en particulier une encre, qui laisse un dépôt pratiquement invisible en éclairage normal, mais que l'on peut rendre temporairement visible par fluorescence de manière à identifier la marque si l'on soumet le vitrage à un rayonnement à l'aide d'une source émettrice d'un tel rayonnement et dans des conditions convenables d'éclairage ambiant.

A cette fin, on utilise avantageusement une encre composée de substances ayant un indice de réfraction très voisin de celui du verre et des couches intercalaires en polyvinylbutyral, sinon égal, de façon que l'invisibilité soit obtenue dans les diverses conditions d'illumination, par example en lumière rasante, quand les faces du vitrage sont mouillées, etc...

Evidement, le marquage peut être effectué par différents moyens utilisant comme indiqué une encre convenable, par exemple à l'aide d'un timbre ou d'une machine à rouleau imprimeur monté sur un bâti convenable et déplacé de façon continue parallèlement à la surface du verre pour y imprimer les marques ou signes d'identification.

Dans le cas particulier de la fabrication de panneaux comprenant au moins une feuille de verre externe et notamment de vitrages formés de deux ou plusieurs feuilles de verre, le marquage sera apposé sur une des faces internes des faces transparentes, avant assemblage.

On obtient ainsi un moyen sûr d'identifier des produits qui ne se prêtent absolument pas à être marqués par des méthodes traditionnelles; en particulier les vitrages feuilletés destinés à la construction sont fabriqués sous les dimensions normalisées et ce n'est que plus tard qu'ils sont découpés aux dimensions requises pour leur mise en place dans les bâtiments, généralement par des distributeurs commerciaux ou par des utilisateurs.

La mise en oeuvre ou l'utilisation du procédé selon l'invention exigent évidemment des moyens d'irradiation pour exciter les substances fluorescentes incorporées dans la composition: En pratique, il s'agit de lampes connues émettant en particulier une lumière de Wood de puissance suffisante; on a constaté que l'emploi d'une lampe de 6 W, par exemple, permet de faire apparaître clairement la marque si l'on opère en l'absence de lumière directe diurne ou artificielle et en présence d'une quantité faible de lumière diffuse.

Des produits industriels fabriqués selon le procédé et profitant de ses avantages sont des vitrages en verre transparent, porteurs d'un certain nombre de signes identificateurs, de préférence disposés en colonnes, pratiquement transparents en lumière normale, mais qui révèlent clairement la présence de ces signes d'identification quand ils sont soumis à une radiation actinique telle que la lumière de Wood. Ces vitrages sont de préférence des stratifiés portant ces marques sur une des faces internes du verre.

D'autres propriétés et avantages spécifiques de l'invention apparaîtront clairement dans la suite, à la description détaillée d'un exemple particulier, illustré de façon schématique à l'aide des dessins qui constituent:

— figure 1: une perspective d'un vitrage stratifié faisant apparaître les couches successives qui forment ses constituants essentiels;
— figure 2: la façon dont ce vitrage apparaît en lumière de Wood.

Pour la clarté du dessin, les diverses couches du vitrage sont évidemment représentés sous une épaisseur notablement augmentée par rapport à ses dimensions superficielles.

Le vitrage stratifié se compose d'au moins deux feuilles de verre extérieures 10 et 12 assemblées par une couche intercalaire adhésive 14 constituée en général de polyvinylbutyral.

Toutes ces couches sont parfaitement transparentes dans les conditions ordinaires d'éclairage diurne ou artificiel.

Selon l'invention, le marquage désiré est effectué par impression sur une des faces des feuilles de verre tournées vers l'intérieur du vitrage, par exemple sur la face 10a de la feuille 10.

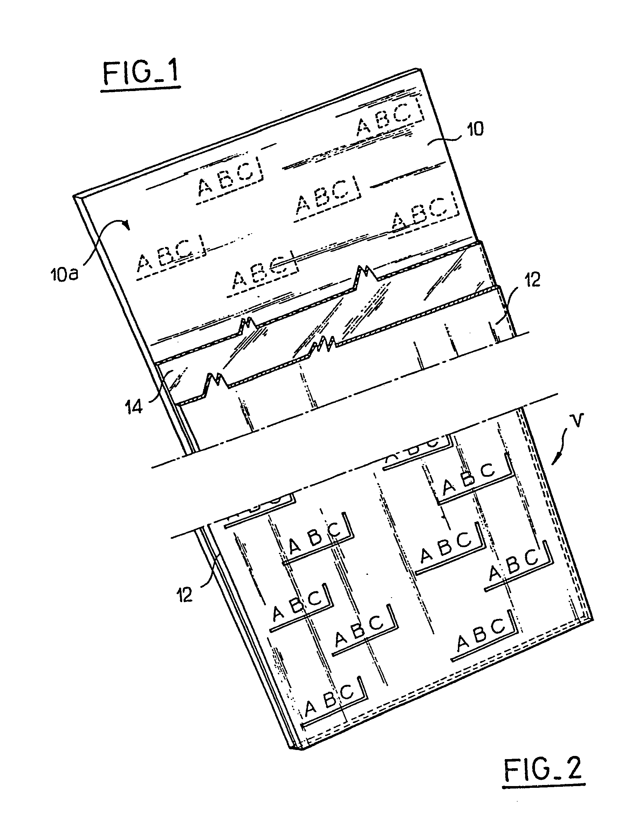

En outre, ces marques représentées schématiquement sur la fig. 2 par des groupes de lettres majuscules seront disposées, de préférence, mais non obligatoirement, de façon régulière sur toute la surface du vitrage, par exemple en lignes ou en colonnes pour obtenir, quelle que soit la façon dont celui-ci sera découpé en fonction de ses dimensions de mise en oeuvre, que les marques d'identification soient présentes sur les diverses pièces provenant de la découpe.

De façon critique, selon l'invention, la marque sera effectuée avec une encre tout à fait transparente en éclairage diurne ou artificiel puisque le stratifié est observé en transparence. Pour mettre en évidence cette qualité qui assure en pratique l'invisibilité du marquage, les dessins ou signes d'identification sont dessinés en trait pointillé sur la figure 1.

Si on le suppose soumis à une radiation V capable d'exciter la fluorescence de l'encre utilisée pour le marquage, le feuilleté ou n'importe quel morceau de celui-ci apparaît comme le montre le figure 2, c'est à dire que les marques deviennent visibles dans les conditions décrites plus haut, conditions qui ne sont pas en soi caractéristiques de l'invention et ne sont pas spécifiquement décrites et revendiqués.

Les caractéristiques de la lumière de Wood ou lumière noire sont d'ailleurs connues: il s'agit de la lumière de l'arc de mercure enfermé dans un tube à quartz, filtrée à travers un verre à l'oxyde de nickel d'épaisseur convenable; elle appartient au domaine ultraviolet et possède un pic d'intensité aux alentours de 3650Å.

Evidemment, les encres fluorescentes peuvent être de types divers bien connus dans la technique. Par exemple, ces encres peuvent être constituées d'une solution de colophane de titre très élevé (claire) en solution dans l'alcool butylique et ou benzylique avec addition d'une petite quantité d'une substance fluorescente connue, par exemple, le pyrène, l'anthracène, la rhodamine B, l'éosine. On ajoute enfin de l'éthylcellulose pour augmenter le pouvoir adhésif du dépôt.

D'autres constituants pourront se substituer à ceux-ci pourvu qu'ils présentent des caractéristiques similaires de luminescence et soient solubles dans les alcools, les plus luminescents étant les plus indiqués.

Pourtant on devra exclure ceux qui donneraient aux marques une coloration trop visible en lumière normale, même si ce n'est que dans des conditions particulières d'incidence, par exemple la fluorescéine.

Enfin, il est clair que le procédé comme les produits industriels susceptibles d'être reconnus dans les conditions indiquées ci-dessus peuvent, sans sortir du domaine de l'invention, subir des variantes et modifications selon diverses opportunités de fabrication ou de mise en oeuvre, d'installation des produits etc.

**Revendications**

1. Procédé pour le marquage de vitrages par dépôt sur une face du vitrage d'une composition telle qu'une encre, caractérisé en ce que le marquage est effectué au moyen d'une composition qui laisse un dépôt pratiquement invisible en lumière normale, mais que l'on peut rendre temporairement visible par fluorescence, de manière à identfier la marque si l'on soumet le vitrage à un rayonnement ionisant à l'aide d'une source émettrice d'un tel rayonnement et dans des conditions convenables d'éclairage embiant.

2. Procédé selon la revendication 1, caractérisé en ce qu'il est utilisé pour le marquage de vitrages feuilletés.

3. Procédé selon la revendication 2, caractérisé en ce que les marques d'identification sont inscrites sur une face tournée vers l'intérieur, de l'une au moins des feuilles de verre du vitrage.

4. Procédé selon la revendication 3, caractérisé en ce que les marques sont apposées sur lesdites feuilles de verre, avant assemblage au moyen de couches adhésives.

5. Procédé selon l'une des revendications 1 à 4, caractérisé en ce que le marquage est effectué en plusieurs positions sur le vitrage de façon qu'une marque au moins soit présente sur les pièce résultant d'une division volontaire ou accidentelle.

6. Procédé selon la revendication 5, caractérisé en ce que les marques sont régulièrement réparties, habituellement en lignes ou en colonnes, sur la surface du vitrage.

7. Procédé selon l'une des revendications 1 à 6, caractérisé en ce que le marquage est effectué à l'aide d'une encre transparente contenant au moins une substance fluorescente.

8. Procédé selon la revendication 7, caractérisé en ce que l'encre est constituée d'une solution alcoolique d'une substance fluorescente transparente.

9. Procédé selon la revendication 8, caractérisé en ce que la solution renferme de l'éthylcellulose.

10. Procédé selon l'une des revendications 7 à 9, caractérisé par le fait que la marque est effectuée à l'aide d'une machine à rouleau imprimeur opérant en continu sur la surface du verre.

11. Vitrage porteur de marques d'identification visibles par fluorescence.

12. Vitrage selon la revendication 11, caractérisé en ce qu'il comprend au moins une feuille de verre externe (10) portant les marques d'identification sur sa face interne (10a).

13. Vitrage selon la revendication 11, caractérisé en ce qu'il s'agit d'un vitrage feuilleté portant les marques sur l'une au moins des feuilles de verre, au contact d'une couche adhésive.

14. Vitrage feuilleté selon la revendication 13, comprenant une série de marques régulièrement disposées en lignes ou en colonnes, sous une surface essentiellement transparente, en nombre suffisant pour garantir en pratique que tout morceau provenant d'une rupture ou d'une découpe portera au moins une partie d'une marque.

## Patentansprüche

1. Verfahren zur Markierung von Verglasungen durch Niederschlag einer Verbindung, wie Tinte, auf einer Oberfläche der Verglasung, dadurch gekennzeichnet, daß die Markierung mittels einer Zusammensetzung vorgenommen wird, die einen bei normalem Licht praktisch unsichtbaren Niederschlag hinterläßt, den man jedoch zur Identifizierung des Zeichens durch Fluoreszenz vorübergehend sichtbar machen kann, wenn man die Verglasung einer ionisierenden Strahlung mit Hilfe einer Strahlungsquelle für eine solche Strahlung und unter zweckmäßigen Umgebungsbeleuchtungsbedingungen aussetzt.

2. Verfahren nach Anspruch 1, dadurch gekennzeichnet, daß es zur Markierung von Mehrfachglasscheiben angewendet wird.

3. Verfahren nach Anspruch 2, dadurch gekennzeichnet, daß die Identifikationszeichen auf der nach innen weisenden Oberfläche wenigstens einer der Scheiben der Verglasung eingeschrieben werden.

4. Verfahren nach Anspruch 3, dadurch gekennzeichnet, daß die Marken auf die Glasscheiben vor deren Zusammenbau mittels Klebstoffaufträgen angebracht werden.

5. Verfahren nach einem der Ansprüche 1 bis 4, dadurch gekennzeichnet, daß die Markierung auf mehreren Stellen auf der Verglasung derart vorgenommen wird, daß wenigstens eine Marke auf Stücken vorhanden ist, die aus einer gewollten oder zufälligen Unterteilung resultieren.

6. Verfahren nach Anspruch 5, dadurch gekennzeichnet, daß die Zeichen regelmäßig in Zeilen oder Kolonnen auf der Oberfläche der Verglasung verteilt werden.

7. Verfahren nach einem der Ansprüche 1 bis 6, dadurch gekennzeichnet, daß die Markierung mit Hilfe einer durchsichtigen, wenigstens eine fluoreszierende Substanz enthaltende Tinte vorgenommen wird.

8. Verfahren nach Anspruch 7, dadurch gekennzeichnet, daß die Tinte von einer alkoholischen Lösung einer transparenten fluoreszierenden Substanz gebildet wird.

9. Verfahren nach Anspruch 8, dadurch gekennzeichnet, daß die Lösung Äthylzellulose enthält.

10. Verfahren nach einem der Ansprüche 7 bis 9, dadurch gekennzeichnet, daß das Zeichen mit Hilfe einer kontinuierlich arbeitenden Rotationsdruckmaschine auf die Glasoberfläche aufgebracht wird.

11. Durch Fluoreszenz sichtbare Identifikationszeichen tragende Verglasung.

12. Verglasung nach Anspruch 11, dadurch gekennzeichnet, daß sie wenistens eine äußere Glasscheibe (10) enthält, die die Identifikationszeichen auf ihrer Innenoberfläche (10a) trägt.

13. Industrielles Produkt nach Anspruch 11, dadurch gekennzeichnet, daß es sich um eine Verbundglasscheibe handelt, die die Zeichen auf wenigstens einer der Glasscheiben trägt, die in Kontakt mit einer Klebemittelschicht steht.

14. Verbundglasscheibe nach Anspruch 13, enthaltend eine Reihe von regelmäßig in Zeilen oder in Kolonnen angeordneten Zeichen unter einer im wesentlichen transparenten Oberfläche in einer Anzahl, die Ausreicht, daß in der Praxis jedes aus einem Bruch oder einer Zerlegung stammende Teilstück wenigstens einen Teil eines Zeichens trägt.

## Claims

1. Method of marking panes by deposition on a surface of the pane of a composition such as an ink, characterised in that the marking is carried out by means of a composition which leaves a deposition which is practically invisible in normal light but which may be rendered temporarily visible by fluorescence so as to identify the mark by subjecting the pane to ionising radiation by means of a source emitting such radiation under suitable conditions of ambient illumination.

2. Method according to claim 1, characterised in that it is used for marking of laminated panes.

3. Method according to claim 1, characterised in that the identification marks are applied on a surface directed towards the interior of at least one glass sheet of the pane.

4. Method according to claim 3, characterised in that the marks are applied to said glass sheets before assembly by means of adhesive layers.

5. Method according to one of claims 1 to 4, characterised in that the marking is carried out at a plurality of positions on the pane such that at least one mark is present on the pieces resulting from intentional or accidental division.

6. Method according to claim 5, characterised in that the marks are regularly distributed, commonly in lines or in columns, on the surface of the pane.

7. Method according to one of claims 1 to 6, characterised in that the marking is carried out by means of a transparent ink containing at least one fluorescent substance.

8. Method according to claim 7, characterised in that the ink comprises an alcoholic solution of a transparent fluorescent substance.

9. Method according to claim 8, characterised in that the solution contains ethylcellulose.

10. Method according to one of claims 7 to 9, characterised in that the mark is made by means of a roller printing machine operating continuously on the pane surface.

11. A pane carrying identification marks which are visible under fluorescence.

12. A pane according to claim 11, characterised in that it comprises at least one external glass sheet (10) carrying the identification marks on its interior surface (10a).

13. A pane according to claim 11, characterised in that it belongs to a laminated pane carrying marks on at least one of the glass sheets, in contact with an adhesive layer.

14. Laminated pane according to claim 13, comprising a series of marks regularly arranged in lines or in columns under an essentially transparent surface, sufficient in number to guarantee in practice that any fragment produced on breakage or cutting will bear at least a part of a mark.

FIG_1

ABC

ABC

ABC

ABC

ABC

10

ABC

ABC

ABC

10a

ABC

12

14

V

ABC

ABC

ABC

ABC

12

ABC

ABC

ABC

ABC

ABC

ABC

FIG_2